# EUROPEAN PATENT APPLICATION

(11) **EP 4 033 696 A1**
(43) Date of publication of application: **27.07.2022**
(21) Application number: 21305068.5
(22) Date of filing: 20.01.2021
(51) Int. Cl.: H04L 9/32

(54) **METHOD FOR GENERATING SIGNATURES**

(71) Applicant: Thales DIS France SA, 92190 Meudon (FR)
(72) Inventor: DEBOIS, Georges, 92190 Meudon (FR); SLAVNIC, Nikola, 92190 Meudon (FR)
(74) Representative: Dai, Simin

(57) **Abstract**

The present invention relates to a method for generating signatures in a secure element based on a one-time hash-based signature scheme combined with a Merkel tree, the secure element comprising a plurality of key pairs of a private key and a public key, comprising:
- storing (406) identifiers and values, in a corresponding manner, of determined sibling nodes of the non-root nodes of a first path in a non-volatile memory of the secure element;
- generating (407) a second signature from a second message and a private key of a second key pair of the plurality of key pairs through the one-time hash-based signature scheme, wherein the second signature is associated with a second path of the Merkel tree beginning from a node derived from a public key of the second key pair to the root;
- determining (409) that one or more of sibling nodes of non-root nodes of the second path have the same identifiers as one or more of the stored identifiers;
- retrieving (410) from the non-volatile memory values corresponding to the one or more stored identifiers for the second signature;
- calculating (411) values of the other sibling nodes of the non-root nodes of the second path for the second signature.

## Description

### TECHNICAL FIELD

The present invention relates generally to the field of computer security and more particularly to a method for efficiently generating signatures using post-quantum cryptography in a secure element.

### BACKGROUND

Conventional cryptography and its typical factoring and calculating of difficult mathematical scenarios may not matter when dealing with quantum computing. These cryptography methods, such as RSA, ECDSA, etc., are not capable of withstanding an attack from a powerful quantum computer.

Post-Quantum Cryptography (also referred to as "quantum-proof" "quantum-safe", "quantum-resistant", or simply "PQC") takes a futuristic and realistic approach to cryptography, which addresses the evolving computing devices into quantum computing and post-quantum computing.

Today's PQC comprises an approach of hash-based cryptography based on Merkle's hash tree public-key signature system of 1979, which is built upon a one-message-signature idea of Lamport and Diffie.

Hash-based cryptography is based on cryptographic systems like Lamport signatures, Merkle Signatures, Leighton-Micali signature scheme (LMS), extended Merkle signature scheme (XMSS), and SPHINCs scheme, etc.

One area that is being explored to counter quantum computing challenges is hash-based signatures (HBS) since these schemes have been around for a long while and possess the necessarily basic ingredients to counter the quantum counting and post-quantum computing challenges. HBS schemes are regarded as fast signature algorithms working with fast platform secured-boot, which is regarded as resistant to quantum and post-quantum computing attacks.

However, a signature generated with hash-based cryptography is expensive in terms of performance requirement. Thousands even millions of digests (also called hash values, hashes) computation should be done in order to generate one hash-based signature. Many one-time signature (OTS) data blocks and within each OTS data block thousands of digests need to be computed in order to have an OTS signature generated and prepare a next signature. Thus, the time required for generating a single hash-based signature is much longer than a conventional signature.

Consequently, it requires powerful computing capabilities and high costs in terms of implementation hardware or/and software to fast generate a huge number of digests for hash-based signatures.

Today, multi-threading or parallel computation technology is used in computers with powerful computing capabilities to reduce the time required in the generation of the hash-based signature.

However, such solutions are not really usable for secure elements (SE) as they do not have the same computing capability level as the computer systems. As known in the art, a secure element is a tamper-proof microprocessor-based chip adapted to be embedded especially in any mobile device (usually having a small size suitable to be carried by a human user in life). It ensures the data is stored in a safe place, and information is given to only authorized applications and people. The secure element is multi-applicative and allows to secure a wide range of applications in any device and various use cases: payment, couponing, transport, access control, ticketing, corporate, cloud computing, e-government.

Therefore, it is desirable to have new solutions to address efficiently generating hash-based signatures in such secure elements so as to provide the futuristic Post-Quantum cryptography protection for messages exchanged between devices that people are more and more frequently carrying and using in our modern life.

### SUMMARY

In order to solve the above mentioned technical problems, the present invention provides a solution for efficiently generating signatures using post-quantum cryptography in a secure element.

According to the invention, there is a method for generating signatures in a secure element based on a one-time hash-based signature scheme combined with a Merkel tree, the secure element comprising one or more key pairs of a private key and a public key, wherein a first signature has been generated from a first message and a private key of a first key pair of the one or more key pairs through the one-time hash-based signature scheme, the first signature being associated with a first path of the Merkel tree beginning from a node derived from a public key of the first key pair to the root of the Merkel tree, and wherein sibling nodes of non-root nodes of the first path have been determined for the first signature, the method comprising:
- storing at least part of public keys used in the determination of the sibling nodes of the non-root nodes of the first path in a non-volatile memory of said secure element;
- storing identifiers and values, in a corresponding manner, of the determined sibling nodes of the non-root nodes of the first path in a non-volatile memory of the secure element;
- generating a second signature from a second message and a private key of a second key pair of the plurality of key pairs through the one-time hash-based signature scheme, wherein the second signature is associated with a second path of the Merkel tree beginning from a node derived from a public key of the second key pair to the root;
- determining that one or more of sibling nodes of non-root nodes of the second path have the same identifiers as one or more of the stored identifiers;
- retrieving from the non-volatile memory values corresponding to the one or more stored identifiers for the second signature;
- calculating values of the other sibling nodes of the non-root nodes of the second path for the second signature.

With the invention, it is no longer necessary to recalculate all values of essential nodes (e.g., the sibling nodes of the non-root nodes of the second path) of the Merkel tree for a newly generated signature (e.g., the second signature) in the secure element. As known, the values of the essential nodes are to be sent with the signature to a verifier's device for it to verify the signature with these values and a public key corresponding to the root of the Merkel tree.

Rather, the invention proposes to store values of essential nodes (e.g., the sibling nodes of the non-root nodes of the first path) previously calculated for a previously generated signature (e.g., the first signature) in the non-volatile memory (NVM) of the secure element, and reuse at least some of the previously calculated values for the newly generated signature.

Thus, the number of times for calculating values (e.g., hash function applications, digest calls) of the essential Merkel tree nodes for the newly generated signature is substantively decreased. The greater the Merkel tree's structure (e.g., larger number of public keys as the brick base of the tree) used in the cryptography scheme is, the more the time for the new signature's generation may be saved. The advantages of the invention will be clearer and easily understood when reading embodiments explained in the detailed description hereinafter.

The invention provides a simple and efficient solution to improve performance on quantum resistant signature generation without requiring high cost hardware and software implementation (only NVM needed to store the values of the essential nodes for reuse later on). Thus, the invention is useful especially for devices with limited computing capacities such as portable devices embedding secure elements.

Moreover, the invention does not require any modifications on the current PQC scheme's Request for Comments (RCF) and standards, and thus is applicable to various products compliant with the standards.

In a particular example, the method further comprises replacing in the non-volatile memory the stored identifiers and values of the sibling nodes of the non-root nodes of the first path with identifiers and the values of the sibling nodes of the non-root nodes of the second path.

This updating manner only stores information (identifier and values) of the essential Merkel tree nodes of the most recently generated signature and deletes information of the essential Merkel tree nodes of the old (used) signature. This manner enables to save storage space on the NVM and allows further lowering costs concerning the NVM.

In a particular example, the method further comprises storing identifiers and the calculated values, in a corresponding manner, of the other sibling nodes of the non-root nodes of the second path in the non-volatile memory.

This storing manner not only stores information (identifier and values) of the essential Merkel tree nodes of the most recently generated signature, but also maintains information of the essential Merkel tree nodes of the old signatures. This manner allows maintaining values of more Merkel tree nodes that may be reused for a next signature. This manner may avoid more computations for the essential nodes for the next signature and thus save more time for preparing the next signature.

In a particular example, the method further comprises performing the steps of generating, determining, retrieving, and calculating in order to generate a third signature and determine values of sibling nodes of non-root nodes of a third path of the Merkel tree associated with the third signature.

In a particular example, the method further comprises outputting in a data structure any one of the generated signature and values of sibling nodes of non-root nodes of a path of the Merkel tree associated with this generated signature.

In a particular example, there is a secure element comprising a processor and a non-volatile memory, wherein the processor is adapted to perform the steps of the method according to the invention.

In a particular example, there is a signing device comprising the secure element, wherein the device is configured to send a message to the secure element which signs the message, and receive a signature generated from the message by the secure element.

In a particular example, there is a system comprising the signing device and a verifying device, wherein:
- the signing device is configured to send a signature to the verifying device via a telecommunications network;
- the verifying device is configured to receive and verify the signature.

In a particular example, there is a computer program comprising instructions which, when the program is executed by a processor of a secure element, cause the secure element to carry out the steps of the method according to the invention.

The foregoing has outlined rather generally the features of one or more embodiments of the present invention in order that the detailed description of the present invention that follows may be better understood. Additional features and advantages of the present invention will be described hereinafter which may form the subject of the claims of the present invention.

The advantages and features of the system and the computer program according to the embodiments of the present invention are the same with those of the above described method and will not be repeated here.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this description, illustrate embodiments consistent with the invention and, together with the description, serve to explain the principles of the invention.
FIG. 1 illustrates an example of a hash-based signature scheme that uses a one-time signature scheme combined with a Merkel tree in the prior art;
FIGS. 2A, 2B, 2C illustrate exemplary key generating, signing and verifying principles of the one-time signature scheme of FIG. 1 which are known in the prior art;
FIG. 3 illustrates an example of an architecture of a secure element for practicing a signing method in accordance with an embodiment of the present invention;
FIG. 4 illustrates a flowchart of an example of a signing method in accordance with an embodiment of the present invention;
FIG. 5 illustrates an example of a device comprising a secure element in accordance with an embodiment of the present invention;
FIG. 6 illustrates an example of a system wherein a signing device generates and sends a signature to a verifying device which verifies the signature, in accordance with an embodiment of the present invention.

Specific embodiments in this invention have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

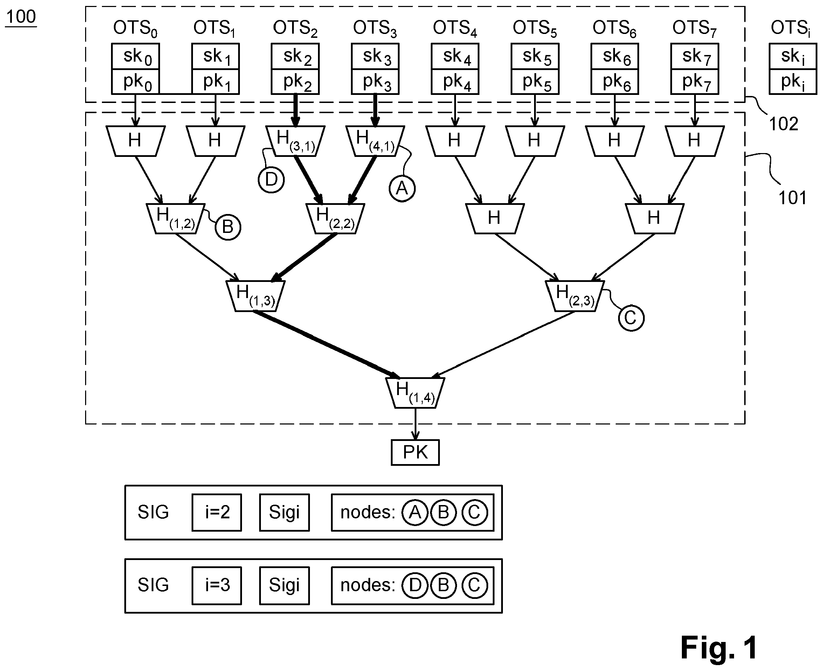

For example, as illustrated with respect to **FIG. 1****,** a scheme of hash-based signature scheme 100 is shown that uses a Merkel tree 101 combined with a one-time signature (OTS) scheme 102. Each OTS block OTSi (i=0, 1, 2, ..., 7) is representative of a key pair of a private key ski and a public key pki. Each private key ski is used to only sign a single message. The key pair can also be called one-time key pair. A signature generated with the OTS scheme can also be called one-time signature.

In the example of FIG. 1, there are 8 OTS blocks, i.e., 8 key pairs. Accordingly, 8 messages may be signed through the OTS scheme such as LM-OTS scheme compliant with LMS RFC, Winternitz OTS (WOTS) scheme compliant with XMSS RFC, so as to generate 8 signatures.

It should be noted that the 8 OTS blocks are given as only an example for clarity. The number of OTS blocks is not limited by the invention.

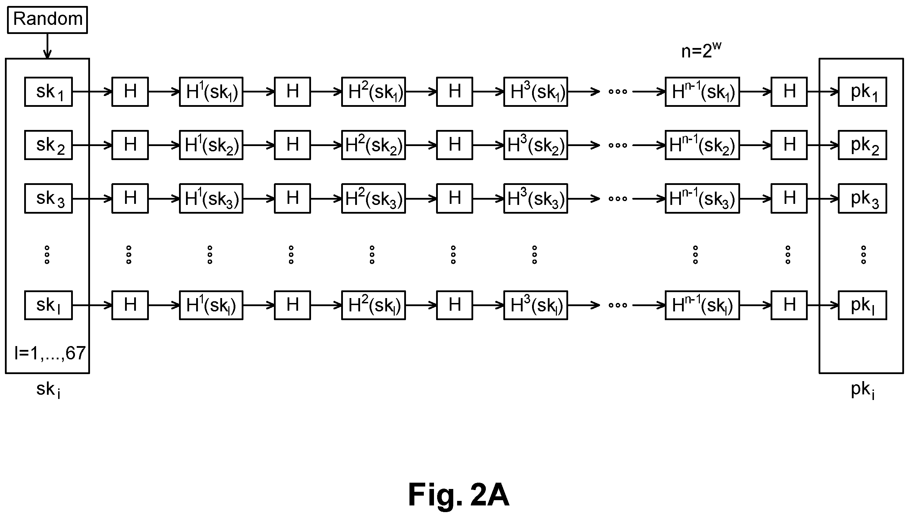

FIG. 2A-2C illustrates WOTS scheme that is used in this document as an example for the OTS scheme. WOTS scheme is well known in the art and not concretely described herein. Only principles of WOTS scheme are briefly discussed herein. It is noted that the invention does not make any modifications on WOTS scheme (or any other OTS scheme, e.g., LM-OTS that may replace the exemplary WOTS scheme) known in the prior art.

**FIG. 2A** illustrates an example of a key pair generation with WOTS scheme. For example, a random value (or seed) is provided as a private key ski. The private key ski is divided into 67 parts s1, s2, ..., sl (l=1, ..., 67). The 67 parts comprise 64 parts of data and 3 parts of checksum, as known in the prior art. The invention is applicable on the parameters referred in the RFCs.

Then, each part sl is recursively hashed with a hash function by n = 2^{w} times (e.g., w=4) to obtain a 2^{w}th (e.g., 16th) digest (also called value, hash value, hash herein) which is designated as pl. When all parts s1, s2, ..., s67 of the private ski have been hashed, the obtained digests p1, p2, ..., p67 are concatenated to generate a public key pki which may verify a signature generated using the private key ski. Thus, a key pair of ski and pki is generated.

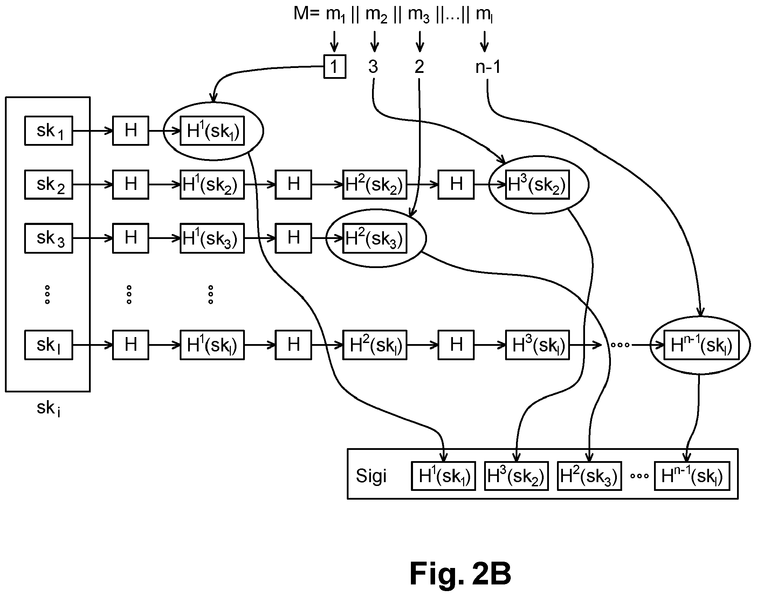

Now please refer to **FIG. 2B** illustrating an example of a signature generation with WOTS. Firstly, for example, a message to be signed M is parsed (or transformed) into 67 integers m1, m2, ..., ml (l=1, ..., 67), each integer being between 0 and 2^{w} (w=4 in this example). Then, we take a private key ski of a key pair that has been generated. Each part sl of the private key ski is recursively hashed with the hash function by a number of times corresponding to the integer ml to obtain a final digest (e.g., sl is hashed 1 time to obtain H¹(s1), s2 is hashed 3 times to obtain H³(s2), etc.). When all parts s1, s2, ..., s67 of the private ski have been hashed, s1, s2,..., s67 of the private ski have been hashed, the obtained digests are concatenated to generate a signature sigi.

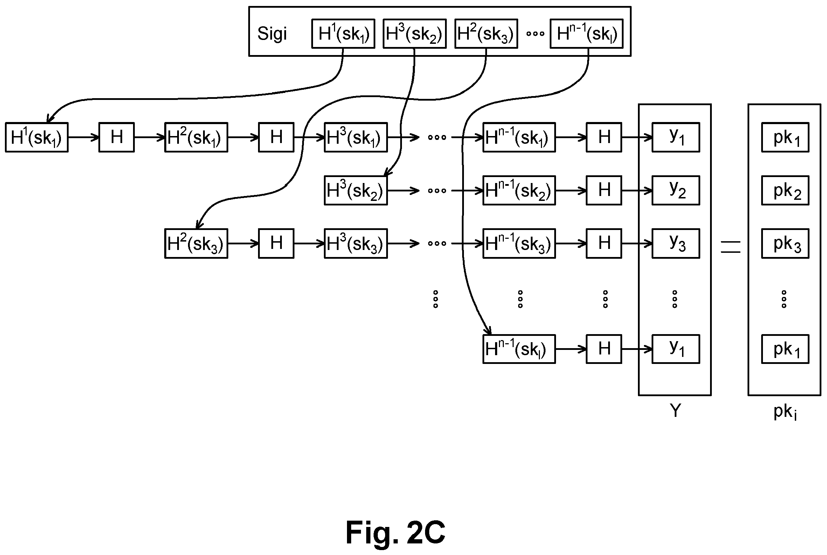

**FIG. 2C** illustrates an example of how to verify the signature sigi generated in FIG. 2B. Briefly, the 67 digests contained in the signature sigi are extracted. Each digest is recursively hashed with the hash function by a number of times which is the difference between 2^{w}(16 in this example) and ml to obtain a value yl (l=1, ..., 67). For example, the first digest H¹(s1) is hashed 15 (=16-1) times; the second digest H³(s2) is hashed 13 (=16-3) times, etc. All the obtained values y1, y2, ..., y67 are concatenated to generate a value Y. This value Y is compared with the private key pki. If they match each other, the signature sigi is verified to be true.

It can be seen that OTS scheme is based on hashes. OTS scheme is also called to be a one-time hash-based signature scheme.

Now, let us turn back to **FIG. 1****.** As mentioned above, the HBS scheme uses a Merkel tree combined with the OTS scheme (the WOTS scheme of FIG. 2A-2C for example). This is also known in the art and not modified by the invention. The principle of the Merkel tree is reminded as below for understanding its basic functions.

The Merkel tree shown in the example of FIG. 1 is a binary tree established from 8 hash nodes with recursive concatenation. The 8 hash nodes at the first level of the tree are like basic bricks for forming the tree. The number of nodes of the Merkel tree is not limited by the invention. It can be any integer that may be represented by 2^{x}.

Each of the 8 nodes at the first level of the tree is derived from a public key pki of a key pair generated in the key generation process of OTS scheme (e.g. FIG. 2A) by applying a hash function on the public key. The hash function may be, for example, SHA2-256 also known as SHA256 or SHA-256 used in the RFC LMS, SHA2-256, SHA2-512 SHAKE128, SHAKE 256 used in RFC XMSS, or any hash functions which are collision resistant but not complaint with RFCs. In other words, each of the 8 nodes of the first level has a value (digest, hash) derived from a hashed public key pki.

The 8 nodes are recursively concatenated to form other nodes till the root of the tree.

Each signature generated through the OTS scheme (e.g. FIG. 2B) is associated with a particular path of the Merkel tree. This path begins from the public key pki of the signature and ends at the root of the Merkel tree. For example, a signature sigi (i=2) is associated with a path comprising nodes H(3, 1), H(2, 2), H(1, 3) and the root H(1, 4).

Each node has an identifier used to identify a position of the node on the tree. For example, the above-mentioned H(j,k) may be used as the identifier of a node H wherein j represents a sequence number on a level and k represents a number of a level of the tree. Any other forms of identifiers may be used as alternatives, like a unique reference number or character for a node.

The root of the tree is used as a general public key PK for verifying each signature generated by the OTS scheme and associated with the corresponding path of the Merkel tree.

In other words, the verification of such a signature is not to (or not only to) verify the signature sigi with the pki, but (also) to verify the signature sigi with the general public key PK that is the root of the Merkel tree.

For example, a signer's device may generate a signature sigi (i=2) from a message to be signed and a private key sk2 though OTS algorithm and determine sibling nodes (e.g., H(4, 1), H(1, 2), H(2, 3)), respectively denoted as A, B, C in FIG. 1) of the non-root nodes (e.g., H(3, 1), H(2, 2), H(1, 3)) of the path associated with the signature sig2.

Then the signer's device sends the signature sig2 along with values of the determined sibling nodes (e.g., H(4, 1), H(1, 2), H(2, 3)) in a data structure to a verifier's device. For example, the sig2 and the values may be combined in a concatenated manner in the data structure. This data structure may be called a final signature SIG generated by the hash-based signature scheme that uses OTS scheme in combination with the Merkel tree.

The verifier's device calculates a value (e.g., the value Y of FIG. 2C) from the signature sig2 with the applied OTS scheme (e.g., WOTS) and hashes the value to obtain a digest. This digest is then concatenated with the received values of the sibling nodes (e.g., H(4, 1), H(1, 2), H(2, 3)) to obtain a result. This result is compared with the general public key PK held by the verifier's device to verify the signature sig2.

As can be seen from the aforementioned prior art's process for generating the final signature SIG involves a lot of digest calls (or hash calculations). The invention aims at reducing the number of digest calls so as to enhance the performance in the signature generation.

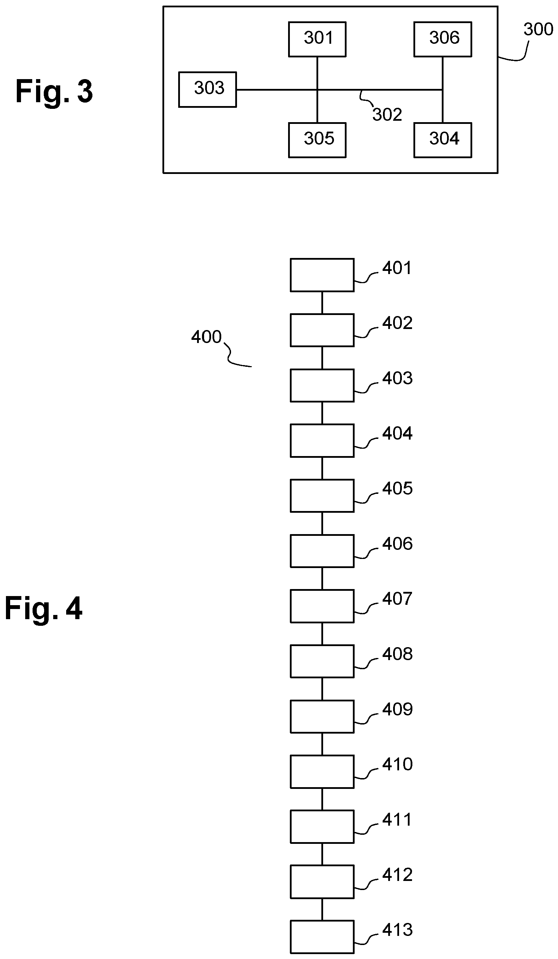

**Fig. 3** illustrates an example of an architecture of a secure element 300.

The secure element 300 comprises a processing unit 301 connected to a central bus 302. The central bus is also connected to a communication interface 303, a Volatile Memory (RAM) 304, a Non-Volatile-Memory (NVM) 305 and a crypto coprocessor 306 (optional). Other architecture of secure element can be adapted for the invention.

Such a secure element 300 is made in an integrated circuit (IC). But taking into consideration that the secure element will be software configured it can be seen as a piece of chip. In other words, the secure element can be integrated inside a system on chip in which the secure element is a module communicating through its communication interface 304.

For a secure element 300 embedded inside a System-On-Chip (SOC), the communication interface 303 can be a parallel interface connected to the central bus of the SOC. In that case the host of the secure element 300 is the SOC. The communication interface 303 will mainly comprise a buffer for receiving commands and data from the host.

If the secure element 300 is made to be alone inside an integrated circuit, the communication interface 303 may include one or more interface according one or more well-known protocol. Preferentially, a serial interface is used, like ISO7816, ISO, USB, I2C, SPI, SWP or any serial interface commonly used for communication between two chips. It is also possible to have a contactless interface to couple directly an antenna to the chip like: IS014443, Zigbee, Bluetooth, Bluetooth Low Energy (BLE) or any other.

The crypto coprocessor 306 is implemented for making computing some operation dedicated to cryptography faster than the processing unit 301. Even if the use of a crypto coprocessor 306 is not necessary, it is recommended to have one for performing strong cryptographic function that could take a long processing time on a general purpose processor like the processing unit 301.

The method of the present invention may be performed by the processing unit 301 or by the crypto coprocessor 306 or by cooperation of the two.

The non-volatile memory 305 can comprise several type of memory like ROM, PROM, E2PROM, or Flash E2PROM. Typically a part of the memory is programmed only once and can be programmed directly by the IC manufacturer. All kind of data and program that are provided by the IC manufacturer can use a technology that is not erasable. The volatile memory 304 and the non-volatile memory 305 is arranged to be separable in different area that are easily identifiable by their address.

The essential idea of the invention is to use the non-volatile memory 305 to store values of essential nodes (e.g., the sibling nodes of the non-root nodes of the first path in FIG. 1) previously calculated for a previously generated signature and reuse at least some of the stored values for preparing a next signature.

As aforementioned, the secure element 300 may be adapted to be embedded in any devices, especially in portable devices (usually having a small size suitable to be carried by a human user in life).

The secure element ensures the data is securely stored in it. The secure element may be multi-applicative and allow to secure a wide range of applications in the device with various use cases: payment, couponing, transport, access control, ticketing, corporate, cloud computing, e-government.

**Fig. 4** illustrates an exemplary process flow of a method 400 for generating signatures in a secure element based on a one-time hash-based signature scheme combined with a Merkel tree. The method is suitable to be performed by the secure element 300 shown in FIG. 3.

The secure element 300 implements a hash-based signature (HBS) scheme (e.g., FIG. 1) that uses an OTS scheme combined with a Merkel tree to provide PQC protection for sensitive messages.

In the currently described example, the OTS scheme used in the HBS scheme is WOTS scheme as illustrated in FIG. 2A-2C. Other alternative OTS schemes may also be used according to the HBS scheme's setting particularly implemented in the secure element.

For the sake of simplicity, a single Merkel tree structure is used in the current example. But a person skilled in the art may easily understand that more Merkel trees may be used according to the HBS scheme's setting particularly implemented in the secure element.

Also it should be understood the Merkel tree structure is not limited by 8 nodes on its first level as shown in the example of FIG. 1. Larger or smaller Merkel tree structure may be used according to the HBS scheme's setting particularly implemented in the secure element.

In a preliminary phase, for example, one or more key pairs of a private key ski and a public key pki are generated, in a step 401, for an OTS scheme (for example in a key generation process of WOTS scheme illustrated in FIG. 2A).

In the example discussed herein, we assume that there are 3 key pairs (e.g., OTS0, OTS1, OTS2 in FIG. 1) generated. As aforementioned, the number of key pairs to be generated is configurable and not limited by the invention.

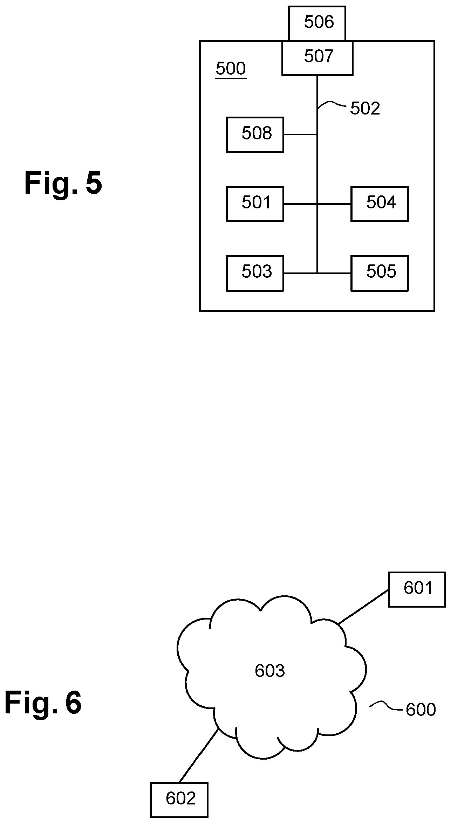

It should be noted that the 3 key pairs may be all generated in the secure element 300. Alternatively, they may be all generated in a computing device (not shown in figures) external to a device comprising the secure element 300, or in a device (e.g., FIG. 5) comprising the secure element 300. Alternatively, part of the key pairs may be generated in a computing device external to the secure element 300, and part of the key pairs may be generated in the secure element 300. If the key pairs OTSi are not generated in the secure element 300 itself, they may be transmitted from the generating device to the secure element 300 via a secured way.

The secure element 300 is adapted to generate other key pairs (OTS3, OTS4, OTS5, OTS6, OTS7, ...) to sign messages. The invention also functions if all the 8 key pairs OTS0-OTS7 are generated and held by the secure element.

The 3 key pairs OTSi (i=0, 1, 2) are used to generate 3 OTS signatures.

Public key(s) pki of the key pairs are stored in the NVM 305 of the secure element 300. It is noted that the public keys pki need to be stored as they will be used to establish nodes of paths of the Merkel tree which will be associated with respective signatures to be generated. As the private keys ski are used only one time at the signature generation so there is no need to keep the private keys in NVM 305.

A signature (e.g., sigi, i=2) may be generated in the secure element 300 from a message and a private key of a key pair (e.g., sk2 of the key pair OTS2) through an one-time hash-based signature scheme (e.g. WOTS). The signature sig2 can be called a first signature in this document. However, the skilled person may easily understand that there may be other signatures generated in the secure element prior to the signature sig2, for example, by using the key pairs OTS0 and OTS1.

For example, the message may be received in a signing request by the secure element via its communication interface from a device external to the secure element. For example, this device may be a device comprising the secure element and adapted to send the final signature SIG to a verifying device, or a device that communicates wirelessly with the secure element.

The message may comprise any sensitive information that need to be protected by PQC. It may be related to, for example, payment, couponing, transport, access control, ticketing, corporate, cloud computing, e-government, etc.

Though the private key sk2 (index state i=2) is selected in the example to generate the first signature sig2, a person skilled in the art understands that the selection of the private key may be randomized or ordered according to the HBS scheme's setting particularly implemented in the secure element. If the selection of the private key is implemented as randomized, we just ensure that one index state (i.e. one private key) is used only one time.

The secure element 300 determines, in step 402, a path of the Merkel tree used in the HBS scheme implemented in the secure element, the path beginning from a node derived from the public key pk2 of the first key pair OTS2 to the root PK of the Merkel tree. The path may be called a first path (or nth path, n=1), as it is associated with the first signature sig2.

For example, this path is shown in FIG. 1. It may be made up by non-root nodes H(3, 1), H(2, 2), H(1, 3) and the root H(1, 4).

The secure element 300 determines, in step 403, sibling nodes of the non-root nodes of the first path for the first signature. For example, H(4, 1) is the sibling node of H(3, 1). H(1, 2) is the sibling node of H(2, 2). H(2, 3) is the sibling node of H(1, 3). These sibling nodes are designated as A, B, C respectively in FIG. 1.

These sibling nodes may be called essential nodes of the signature sig2 in this document as their values need to be sent along with the signature sig2 to a device for verifying the signature sig2.

The sibling nodes A, B, C may have (4, 1), (1, 2), and (2, 3) as their identifiers. Other forms of identifier may be used as aforementioned.

The secure element 300 also calculates, in step 404, values of the sibling nodes A, B, C according to the Merkel tree scheme that is known in the art and not explained in details herein. With the invention, the secure element does not need to (even if it can) calculate values of all nodes of the Merkel tree. Only values of essential nodes of the currently generated signature(s) need to be calculated (e.g., the sibling nodes A, B, C of the non-root nodes of the Merkel tree path of the signature sig2). In another example, a plurality of signatures may be generated simultaneously and thus only values of essential nodes of these signatures need to be calculated.

For example, the secure element 300 calculates the node A's value by generating a new public key pk3 by applying a hash function 2^{w} times (e.g., FIG. 2A) to a random value (seed, or private key) sk3 determined by the secure element, and applying a hash function of the Merkel tree scheme to the public key pk3. The node B has a value which is concatenated from a value obtained by hashing the public key pk0 and a value obtained by hashing the public key pk1 with the hash function. The secure element 300 does not need to calculate pk0 and pk1 since they are already stored in the NVM 305. The node C has a value obtained in a similar manner by recursively concatenating values respectively derived from public keys pk4, pk5, pk6, and pk7 which may be generated by the secure element 300 by respectively applying a hash function 2^{w} times (e.g., FIG. 2A) to random values (seeds, or private keys) sk3, sk4, sk5, sk6, sk7 determined by the secure element, each requiring 2^{w} times of hash computations.

It can be seen in this example that the secure element 300 performs about 5^{∗}2^{w} times of hash computations for calculating the values of the sibling nodes A, B, C.

In this example, the secure element generates the key pairs OTS3∼OTS7 on its own. The secure element 300 may store, in step 406, at least part or all of the calculated public keys pk3∼pk7 in NVM 305 in order to speed up preparing next signatures. Alternatively, key pairs OTS3∼OTS7 may be generated by the secure element or received by it from an external device. And the public keys pk3∼pk7 are stored in secure element 300's NVM storage, just like the public keys pk0∼pk2.

The signature sig2 and the values of the sibling nodes A, B, C may be put, in step 405 by the secure element 300, for example in a concatenated manner, in a data structure as a final signature. The secure element 300 may output the final signature to a device external to the secure element. For example, this device may be a signing device comprising the secure element and adapted to send the final signature to a verifying device, or a verifying device that communicates wirelessly with the secure element.

The secure element 300 may store, in step 406, the identifiers of the sibling nodes A, B, C and their corresponding values in the non-volatile memory 305. For example, each value of the node may be stored in correspondence with, or in relation with the identifier of the node in a table or list.

This enables to easily search an identifier of a node from the table or list, and find the value of the node according to the identifier, when the secure element prepares a next signature.

The secure element 300 may generate, in step 407, a second signature (e.g., sig3 in FIG. 1), from a second message and a private key (e.g., pk3) of a second key pair (e.g., OTS3) through the OTS scheme (e.g., WOTS). This may happen when the secure element 300 receives another message signing request from a device external to the secure element.

As aforementioned, the selection of the private key pk3 for the generation of the next signature may be randomized or ordered according to the particular setting of the OTS scheme implemented in the secure element.

The secure element 300 then performs a similar process as for the first signature sig2.

The second signature sig3 is thus associated with, by the public key pk3, a path of the Merkel tree used in the HBS scheme implemented in the secure element.

The secure element 300 determines, in step 408, that the path begins from a node derived from the public key pk3 of the second key pair OTS3 to the root PK of the Merkel tree. The path may be called a second path (or nth path, n=2 here), as it is associated with the second signature sig3.

For example, the second path is shown in FIG. 1 comprising non-root nodes H(4, 1), H(2, 2), H(1, 3) and the root H(1, 4).

The secure element 300 also identifies, in step 408, identifiers of sibling nodes (essential nodes) of the non-root nodes of the second path for the second signature sig3. For example, H(3, 1) is the sibling node of H(4, 1). H(1, 2) is the sibling node of H(2, 2). H(2, 3) is the sibling node of H(1, 3). These sibling nodes are designated as D, B, C respectively in FIG. 1.

These sibling nodes D, B, C may be called essential nodes of the signature sig3 in this document as their values need to be sent along with the signature sig3 to a device for verifying the signature sig3.

The sibling nodes D, B, C thus have (3, 1), (1, 2), and (2, 3) as their identifiers.

The secure element 300 search in the NVM 305 to determine, in step 409, if the stored identifiers comprise the same identifiers as the identifiers (3, 1), (1, 2), and (2, 3) of the sibling nodes D, B, C. It is found that the nodes H(1, 2) and H(2, 3) are stored in the NVM 305.

The secure element 300 retrieves, in step 410, from the NVM 305 the values corresponding to the stored identifiers (1, 2) and (2, 3) for the second signature sig3.

The secure element 300 calculates, in step 411, values of the other sibling nodes of the non-root nodes of the second path for the second signature. That is, it only calculates value of the node H(3, 1). For example, the value is obtained by hashing the public key pk2 with the hash function set by the Merkel tree scheme used in the secure element 300. The public key pk2 may be retrieved from NVM 305 as it was stored therein in this example. In another example, if pk2 is not stored in NVM, it may be generated by the secure element.

In other words, the secure element 300 needs to perform hash computation only one time for calculating the values of the sibling nodes D, B, C for the second signature sig3.

The number of computations is thus substantively reduced from 5^{∗}2^{w} to 1 for the newly generated signature sig3 when compared with the number of computations required for the previous signature sig2. The invention thus greatly improve the performance of the secure element with a simple measure.

The secure element 300 may replace, in step 412, in the non-volatile memory NVM 305 the stored identifiers and values of the sibling nodes (e.g., H(4, 1), H(1, 2), H(2, 3)) of the non-root nodes of the first path with identifiers and the values of the sibling nodes (e.g., H(3, 1), H(1, 2), H(2, 3)) of the non-root nodes of the second path.

In other words, the secure element 300 only keeps information of essential nodes of the most recently generated signature. This allows saving storage space on the NVM and the use of a cheaper NVM.

Alternatively, the secure element 300 may store, in step 412, identifier and the calculated value of the other sibling node (e.g., H(3, 1) which is not a stored essential node for the previously generated signature) of the non-root nodes of the second path in the NVM 305.

In other words, the secure element 300 may keep information of essential nodes of all generated signatures. This allows avoiding more calculations and further enhancing the secure element's performance at the cost of a more expensive NVM.

Then secure element 300 may output, in step 413, the second signature sig3 along with values of the essential nodes (e.g., the calculated value of H(3, 1), the retrieved values of H(1, 2), H(2, 3)) of the second signature sig3 in a data structure to be sent to a verifier's device. This data structure may be considered to be a second final signature generated by the hash-based signature scheme implemented in the secure element.

When the secure element 300 receives a third message signing request, it may perform similar steps of generating, determining, retrieving, and calculating that are described above in order to generate a third signature and determine values of sibling nodes of non-root nodes of a third path of the Merkel tree associated with the third signature.

Also, the third signature and the values of its essential nodes may be outputted by the secure element 300 in a data structure to be sent to a verifier's device.

**FIG. 5** illustrates an example of a device 500 comprising a secure element. The device 500 may include a processor 501 connected via a bus 502 to a random access memory (RAM) 503, a read-only memory (ROM) 504, and/or a non-volatile memory (NVM) 505. The device 500 further includes a connector 506 connected to the processor and by which the device 501 may be connected to an antenna. Such an antenna may be used to connect the device 500 to various forms of wireless networks, e.g., wide-area networks, WiFi networks, or mobile telephony networks. Alternatively, the device 500 may connect to networks via wired network connections such as Ethernet. The device 500 may also include input/output means 507 providing interfaces to the user of the device, such as one or more screens, loudspeakers, a mouse, tactile surfaces, a keyboard etc.

The device 500 further comprises the secure element 508 of the present invention (e.g., secure element 300). The device 500 may input messages to be signed to the secure element 508 through the bus 502. The messages may be generated by various program applications implemented within the device 500 itself or received from the device 500 from an external device via a wired or wireless telecommunication network.

The device 500 may receive signatures generated from the input messages and output by the secure element 508.

The device 500 may send the signatures via a wired or wireless telecommunication network to a device which verifies the signatures.
**FIG. 6** illustrates an example of a system 600 comprising a signing device 601 and a verifying device 602 which communicates with each other via a telecommunication network 603. For the sake of briefly, only one signing device, one verifying device and one telecommunication network are depicted. It is easily understood that there may be multiple signing devices, verifying devices and telecommunication networks implemented in another example.

The signing device 601 may have the structure of the device 500 for example. It is configured to send to the verifying device 602 via the telecommunications network 603 a digital signature (e.g., any of the first, second, and third final signatures mentioned above). For example, the digital signature comprises the second signature sig3 and the values of the sibling nodes (e.g., the calculated value of H(3, 1), the retrieved values of H(1, 2), H(2, 3)) of the non-root nodes of the second path associated with the signature sig3.

The verifying device 602 is configured to receive and verify the digital signature.

For example, it obtains the signature sig3 and the values from the received digital signature, and verifies the signature sig3 with the values and a general public key held by the verifying device 602. The general public key PK has the same value as the root of the Merkel tree used in the HBS scheme implemented in the signing device 601.

More specifically, the verifier's device 602 may calculate a value (e.g., the value Y of FIG. 2C) from the signature sig3 with the corresponding OTS scheme. The verifying device 602 hashes the value to obtain a digest. This digest is then concatenated with the received values of the sibling nodes (e.g., H(3, 1), H(1, 2), H(2, 3)) to obtain a result. This result is compared with the general public key PK to verify the signature sig2. If the result match the general public key PK, the signature sig2 is verified to be true.

The descriptions of the various embodiments of the present invention have been presented for purposes of illustration, but are not intended to be exhaustive or limited to the embodiments disclosed. Many modifications and variations will be apparent to those of ordinary skill in the art without departing from the scope of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A method for generating signatures in a secure element based on a one-time hash-based signature scheme combined with a Merkel tree, said secure element comprising one or more key pairs of a private key and a public key, wherein a first signature has been generated from a first message and a private key of a first key pair of said key pairs through said one-time hash-based signature scheme, said first signature being associated with a first path of said Merkel tree beginning from a node derived from a public key of said first key pair to the root of said Merkel tree, and wherein sibling nodes of non-root nodes of said first path have been determined for said first signature, the method comprising:
- storing (406) at least part of public keys used in the determination of the sibling nodes of the non-root nodes of said first path in a non-volatile memory of said secure element;
- storing (406) identifiers and values, in a corresponding manner, of the determined sibling nodes of the non-root nodes of said first path in said non-volatile memory;
- generating (407) a second signature from a second message and a private key of a second key pair through said one-time hash-based signature scheme, wherein said second signature is associated with a second path of said Merkel tree beginning from a node derived from a public key of said second key pair to the root;
- determining (409) that one or more of sibling nodes of non-root nodes of said second path have the same identifiers as one or more of the stored identifiers;
- retrieving (410) from said non-volatile memory values corresponding to said one or more stored identifiers for said second signature;
- calculating (411) values of the other sibling nodes of the non-root nodes of said second path for said second signature.

2. The method according to claim 1, further comprising:
- replacing (412) in said non-volatile memory the stored identifiers and values of the sibling nodes of the non-root nodes of said first path with identifiers and the values of the sibling nodes of the non-root nodes of said second path.

3. The method according to claim 1, further comprising:
- storing (412) identifiers and the calculated values, in a corresponding manner, of said other sibling nodes of the non-root nodes of said second path in said non-volatile memory.

4. The method according to claim 2 or 3, further comprising performing the steps of generating (407), determining (409), retrieving (410), and calculating (411) in order to generate a third signature and determine values of sibling nodes of non-root nodes of a third path of said Merkel tree associated with said third signature.

5. The method according to any of claims 1-4, further comprising outputting (413) in a data structure any one of the generated signature and values of sibling nodes of non-root nodes of a path of said Merkel tree associated with this generated signature.

6. A secure element comprising a processor (301) and a non-volatile memory (305), wherein the processor is adapted to perform the steps of the method according to any of claims 1-5.

7. A signing device comprising the secure element (508) according to claim 6, wherein the device is configured to send a message to the secure element which signs the message, and receive a signature generated from the message by the secure element.

8. A system comprising a signing device (601) according to claim 7 and a verifying device (602), wherein:
- the signing device (601) is configured to send a signature to the verifying device via a telecommunications network (603);
- the verifying device (602) is configured to receive and verify the signature.

9. A computer program comprising instructions which, when the program is executed by a processor of a secure element, cause the secure element to carry out the steps of the method according to any of claims 1-5.
